# EUROPÄISCHE PATENTANMELDUNG

(11) **EP 3 040 225 A1**
(43) Veröffentlichungstag der Anmeldung: **06.07.2016**
(21) Anmeldenummer: 15195953.3
(22) Anmeldetag: 24.11.2015
(51) Int. Cl.: B60J 10/70, B60J 1/02

(54) **ABDICHTUNGSANORDNUNG FÜR EINE FAHRZEUGSCHEIBE**

(30) Priorität: 24.12.2014 DE 202014010197 U
(71) Anmelder: REHAU AG + Co, 95111 Rehau (DE)
(72) Erfinder: Chlebecek, Wolfgang, 95111 Rehau (DE); Frank, Michael, 95145 Oberkotzau (DE); Schildbach, Peter, 95126 Schwarzenbach an der Saale (DE)

(57) **Zusammenfassung**

Abdichtungsanordnung für eine Fahrzeugscheibe (10), umfassend eine Halteschiene (20) mit einem Rastkanal (27), der durch eine Zentrier- und Führungsschiene (41) und einen Federschenkel (25) gebildet ist, wobei die Halteschiene (20) an einer Fahrzeugscheibe (10) mittels eines Befestigungsabschnittes (30) befestigbar ist, und umfassend ein Anbauteil (14) mit einem Führungskanal (40), der durch einen Rasthaken (16) und einen Positionierungsanschlag (42) definiert ist, wobei die Zentrier- und Führungsschiene (41) zwischen dem Federschenkel (25) und dem Befestigungsabschnitt (30) angeordnet ist und einen an die Zentrier- und Führungsschiene (41) anschließenden und von dieser abstehenden Gegenanschlag (2) aufweist, und wobei der Anschlag (1) zwischen dem Gegenanschlag (2) und dem Befestigungsabschnitt (30) angeordnet und mit der Zentrier- und Führungsschiene (41) verbunden ist, wobei sich bei der Verbindung von Halteschiene (20) und Anbauteil (14) der Anschlag (1) aufgrund der auf den Federschenkel (25) einwirkenden Montagekraft von dem Gegenanschlag (2) entfernt, und bei der Demontage von Halteschiene (20) und Anbauteil (14) der Anschlag (1) an dem Gegenanschlag (2) anlegt.

## Beschreibung

Die vorliegende Erfindung betrifft eine Abdichtungsanordnung für eine Fahrzeugscheibe, insbesondere für eine Windschutzscheibe, umfassend eine Halteschiene mit einem Rastkanal, der durch eine Zentrier- und Führungsschiene und einen Federschenkel gebildet ist, wobei die Halteschiene an einer Fahrzeugscheibe mittels eines Befestigungsabschnittes befestigbar ist, und umfassend ein Anbauteil mit einem Führungskanal, der durch einen Rasthaken und einen Positionierungsanschlag definiert ist, wobei im Führungskanal die Führungsschiene angeordnet ist und wobei im Rastkanal der Rasthaken eingerastet ist.

Eine gattungsgemäße Abdichtungsanordnung ist in der WO 2013/120671 A1 offenbart. Nachteilig an einer Abdichtungsanordnung des Standes der Technik ist, dass eine Variation der Montage- und Demontagekräfte nur in einem engen Bereich möglich ist.

Vor diesem Hintergrund liegt der Erfindung die Aufgabe zugrunde, eine Abdichtungsanordnung mit den eingangs beschriebenen Merkmalen anzugeben, die eine leichte Montierbarkeit eines Anbauteils bei gleichzeitig hoher Haltekraft des Anbauteils ermöglicht.

Erfindungsgemäß wird diese Aufgabe durch eine Abdichtungsanordnung mit den eingangs beschriebenen Merkmalen gelöst, wobei die Zentrier- und Führungsschiene zwischen dem Federschenkel und dem Befestigungsabschnitt angeordnet ist und einen an die Zentrier- und Führungsschiene anschließenden und von dieser abstehenden Gegenanschlag aufweist, und wobei der Federschenkel über einen Verbindungsabschnitt mit einem Anschlag verbunden ist, wobei der Anschlag zwischen dem Gegenanschlag und dem Befestigungsabschnitt angeordnet und mit der Zentrier- und Führungsschiene verbunden ist, wobei der Verbindungsabschnitt, der Gegenanschlag und der Anschlag so ausgestaltet sind, dass sich bei der Verbindung von Halteschiene und Anbauteil der Anschlag aufgrund der auf den Federschenkel einwirkenden Montagekraft von dem Gegenanschlag entfernt, und bei der Demontage von Halteschiene und Anbauteil der Anschlag an dem Gegenanschlag anlegt. Der Federschenkel überträgt hierbei die Montagekräfte auf den Verbindungsabschnitt. Der Verbindungsabschnitt lenkt in Folge den Anschlag aus, so dass sich dieser von dem Gegenanschlag entfernt. Je nach Länge des Anschlages wirkt hierbei ein unterschiedlich langer Hebelarm, so dass über die Länge des Anschlages die Montagekraft in einem weiten Bereich konstruktiv eingestellt werden kann. Im Gegensatz dazu vergrößert sich bei der Demontage des Anbauteils die Demontagekraft, da der Anschlag an dem Gegenanschlag anliegt, der eine weitere Bewegung des Verbindungsabschnittes bzw. des Anschlages verhindert oder deutlich erschwert.

Der Federschenkel, der Verbindungsabschnitt und der Anschlag weisen vorteilhafterweise im Querschnitt zusammen eine U-förmige oder V-förmige Geometrie auf.

Bevorzugt liegen der Anschlag und der Gegenanschlag flächig aneinander an. Hierdurch lassen sich die Kräfte sehr gleichmäßig von Anschlag zu Gegenanschlag übertragen.

Bevorzugt ist die Halteschiene als eine Kunststoff-Profilleiste ausgebildet. Eine derartige Kunststoff-Profilleiste lässt sich insbesondere im Kunststoff-Extrusionsverfahren bzw. Mehrkomponenten-Kunststoff-Extrusionsverfahren herstellen. Der Kunststoff der Kunststoff-Profilleiste kann Polysulfon (PSU), Poly(ethersulfone) (PES), Polyetherimide (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Polyvinylchlorid (PVC), Polyethylen (PE), Polypropylen (PP), Acrylnitril-Butadien-Styrol (ABS) oder Mischungen der vorgenannten Materialien umfassen.

Die Halteschiene kann mindestens eine Verstärkungs-Einlage enthalten. Die Verstärkungs-Einlage kann sich bis in den Bereich der Zentrier- und Führungsschiene erstrecken und/oder die Verstärkungs-Einlage kann die Zentrier- und Führungsschiene bilden. Insbesondere wenn die Verstärkungs-Einlage die Zentrier- und Führungsschiene bildet, kann die Halteschiene kompakter und kostengünstiger hergestellt werden.

Die Verstärkungs-Einlage kann sich bis in den Bereich des Federschenkels erstrecken und/oder die Verstärkungs-Einlage kann den Federschenkel bilden. Hierbei kann die Verstärkungs-Einlage auch den Verbindungs-Abschnitt und den Anschlag bilden.

Bevorzugt bildet die Verstärkungs-Einlage die Zentrier- und Führungsschiene und den Federschenkel, wobei die Zentrier- und Führungsschiene U-förmig gebogen ist und einen U-Kanal definiert und der Anschlag abschnittsweise in dem U-Kanal aufgenommen ist. Über die Länge des nicht in dem U-Kanal aufgenommenen Abschnittes des Anschlages lässt sich, wie bereits erläutert, die Montagekraft variieren, so dass auch die Variation der Einschublänge in den U-Kanal eine entsprechende Variation ermöglicht.

Die Verstärkungs-Einlage kann aus einem metallischen Werkstoff, insbesondere aus Aluminium oder einer Aluminiumlegierung oder aus Stahl oder einer Stahllegierung sein.

Die Verstärkung-Einlage kann eine Dicke im Bereich von 0,05 bis 0,4 Millimeter, vorzugsweise im Bereich von 0,1 bis 0,3 Millimeter aufweisen.

Der Endabschnitt des Federschenkels kann eine in Richtung des Rastkanals weisende Ausformung aufweisen, die mit dem Rasthaken zusammenwirkt.

Bei dem Anbauteil handelt es sich bevorzugt um eine Wasserkastenabdeckung.

Teil der Erfindung ist ferner eine Fahrzeugscheibe mit einer an der Fahrzeugscheibe befestigten, vorstehend beschriebenen Abdichtungsanordnung, sowie ein Kraftfahrzeug mit einer Fahrzeugscheibe.

Die Erfindung wird anhand der nachfolgenden lediglich ein Ausführungsbeispiel darstellender Figur näher erläutert. Es zeigt:

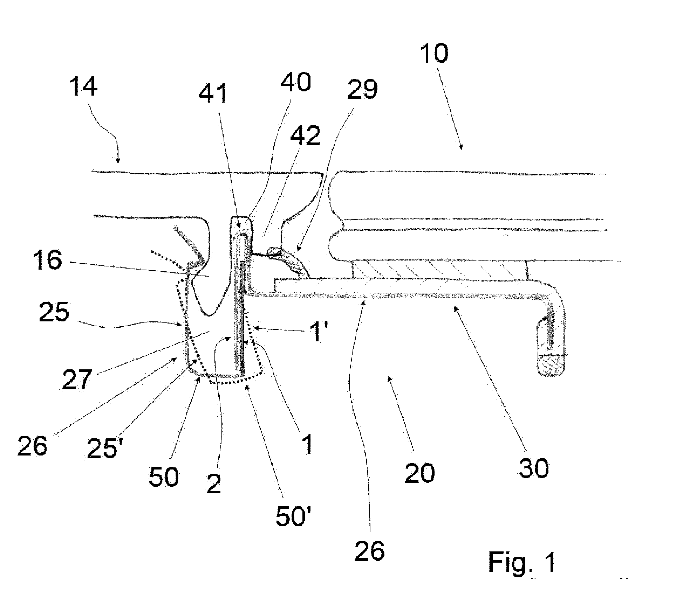

- Fig. 1: eine Querschnittsdarstellung einer Abdichtungsanordnung für eine Fahrzeugscheibe.

Die Fig. 1 zeigt eine Querschnittsdarstellung einer Abdichtungsanordnung für eine Fahrzeugscheibe 10, insbesondere für eine Windschutzscheibe, umfassend eine Halteschiene 20 mit einem Rastkanal 27, der durch eine Zentrier- und Führungsschiene 41 und einen Federschenkel 25 gebildet ist, wobei die Halteschiene 20 an einer Fahrzeugscheibe 10 mittels eines Befestigungsabschnittes 30 befestigbar ist, und umfassend ein Anbauteil 14 mit einem Führungskanal 40, der durch einen Rasthaken 16 und einen Positionierungsanschlag 42 definiert ist, wobei im Führungskanal 40 die Führungsschiene 41 angeordnet ist und wobei im Rastkanal 27 der Rasthaken 16 eingerastet ist. Die Zentrier- und Führungsschiene 41 ist zwischen dem Federschenkel 25 und dem Befestigungsabschnitt 30 angeordnet und weist einen an die Zentrier- und Führungsschiene 41 anschließenden und von dieser abstehenden Gegenanschlag 2 auf. Der Federschenkel 25 ist über einen Verbindungsabschnitt 50 mit einem Anschlag 1 verbunden, wobei der Anschlag 1 zwischen dem Gegenanschlag 2 und dem Befestigungsabschnitt 30 angeordnet und mit der Zentrier- und Führungsschiene 41 verbunden ist. Der Verbindungsabschnitt 50, der Gegenanschlag 2 und der Anschlag 1 sind so ausgestaltet, dass sich bei der Verbindung von Halteschiene 20 und Anbauteil 14 der Anschlag 1 aufgrund der auf den Federschenkel 25 einwirkenden Montagekraft von dem Gegenanschlag 2 entfernt (vgl. gepunktet eingezeichneten Federschenkel 25', Verbindungsabschnitt 50' und Anschlag 1'), und bei der Demontage von Halteschiene 20 und Anbauteil 14 der Anschlag 1 an dem Gegenanschlag 2 anlegt. Der Federschenkel 25, der Verbindungsabschnitt 50 und der Anschlag 1 weisen im Querschnitt zusammen eine U-förmige oder V-förmige Geometrie auf. Der Anschlag 1 und der Gegenanschlag 2 liegen flächig aneinander an. Die Halteschiene 20 enthält mindestens eine Verstärkungs-Einlage 26. Die Verstärkungs-Einlage 26 bildet die Zentrier- und Führungsschiene 41 und den Federschenkel 25, wobei die Zentrier- und Führungsschiene 41 U-förmig gebogen ist und einen U-Kanal definiert und der Anschlag 1 abschnittsweise in dem U-Kanal aufgenommen ist. Hierbei bildet die Verstärkungs-Einlage auch den Verbindungs-Abschnitt 50 und den Anschlag 1. Die Verstärkungs-Einlage 26 ist aus einem metallischen Werkstoff, insbesondere aus Aluminium oder einer Aluminiumlegierung oder aus Stahl oder einer Stahllegierung. Die Verstärkung-Einlage 26 weist eine Dicke im Bereich von 0,05 bis 0,4 Millimeter, vorzugsweise im Bereich von 0,1 bis 0,3 Millimeter auf. Der Endabschnitt des Federschenkels 25 weist eine in Richtung des Rastkanals 27 weisende Ausformung 28 auf, die mit dem Rasthaken 16 zusammenwirkt. Das Anbauteil 14 ist eine Wasserkastenabdeckung. Zwischen dem Befestigungsabschnitt 30 und der Unterseite des Anbauteils 14 ist eine Dichtlippe 29 angeordnet, die zu dem Positionierungsanschlag 42 hin abdichtet.

## Patentansprüche

1. Abdichtungsanordnung für eine Fahrzeugscheibe (10), insbesondere für eine Windschutzscheibe, umfassend:
- eine Halteschiene (20) mit einem Rastkanal (27), der durch eine Zentrier- und Führungsschiene (41) und einen Federschenkel (25) gebildet ist, wobei die Halteschiene (20) an einer Fahrzeugscheibe (10) mittels eines Befestigungsabschnittes (30) befestigbar ist, und
- ein Anbauteil (14) mit einem Führungskanal (40), der durch einen Rasthaken (16) und einen Positionierungsanschlag (42) definiert ist, wobei im Führungskanal (40) die Führungsschiene (41) angeordnet ist und wobei im Rastkanal (27) der Rasthaken (16) eingerastet ist,
**dadurch gekennzeichnet, dass**
die Zentrier- und Führungsschiene (41) zwischen dem Federschenkel (25) und dem Befestigungsabschnitt (30) angeordnet ist und einen an die Zentrier- und Führungsschiene (41) anschließenden und von dieser abstehenden Gegenanschlag (2) aufweist, und
das der Federschenkel (25) über einen Verbindungsabschnitt (50) mit einem Anschlag (1) verbunden ist,
wobei der Anschlag (1) zwischen dem Gegenanschlag (2) und dem Befestigungsabschnitt (30) angeordnet und mit der Zentrier- und Führungsschiene (41) verbunden ist,
wobei der Verbindungsabschnitt (50), der Gegenanschlag (2) und der Anschlag (1) so ausgestaltet sind, dass sich bei der Verbindung von Halteschiene (20) und Anbauteil (14) der Anschlag (1) aufgrund der auf den Federschenkel (25) einwirkenden Montagekraft von dem Gegenanschlag (2) entfernt, und bei der Demontage von Halteschiene (20) und Anbauteil (14) der Anschlag (1) an dem Gegenanschlag (2) anlegt.

2. Abdichtungsanordnung nach Anspruch 1, **dadurch gekennzeichnet, dass** der Federschenkel (25), der Verbindungsabschnitt (50) und der Anschlag (1) im Querschnitt zusammen eine U-förmige oder V-förmige Geometrie aufweisen.

3. Abdichtungsanordnung nach Anspruch 1 oder 2, **dadurch gekennzeichnet, dass** der Anschlag (1) und der Gegenanschlag (2) flächig aneinander anliegen.

4. Abdichtungsanordnung nach einem der vorstehenden Ansprüche, **dadurch gekennzeichnet, dass** die Halteschiene (20) mindestens eine Verstärkungs-Einlage (26) enthält.

5. Abdichtungsanordnung nach Anspruch 4, **dadurch gekennzeichnet, dass** sich die Verstärkungs-Einlage (26) bis in den Bereich der Zentrier- und Führungsschiene (41) erstreckt und/oder die Verstärkungs-Einlage (26) die Zentrier- und Führungsschiene (41) bildet.

6. Abdichtungsanordnung nach Anspruch 4 oder 5, **dadurch gekennzeichnet, dass** sich die Verstärkungs-Einlage (26) bis in den Bereich des Federschenkels (25) erstreckt und/oder die Verstärkungs-Einlage (26) den Federschenkel (25) bildet.

7. Abdichtungsanordnung nach Anspruch 5 und 6, **dadurch gekennzeichnet, dass** die Verstärkungs-Einlage (26) die Zentrier- und Führungsschiene (41) und den Federschenkel (25) bildet, wobei die Zentrier- und Führungsschiene (41) U-förmig gebogen ist und einen U-Kanal definiert und der Anschlag (1) abschnittsweise in dem U-Kanal aufgenommen ist.

8. Abdichtungsanordnung nach einem der Ansprüche 4 bis 7, **dadurch gekennzeichnet, dass** die Verstärkungs-Einlage (26) aus einem metallischen Werkstoff, insbesondere aus Aluminium oder einer Aluminiumlegierung oder aus Stahl oder einer Stahllegierung ist.

9. Abdichtungsanordnung nach einem der Ansprüche 4 bis 8, **dadurch gekennzeichnet**, die Verstärkung-Einlage (26) eine Dicke im Bereich von 0,05 bis 0,4 Millimeter, vorzugsweise im Bereich von 0,1 bis 0,3 Millimeter aufweist.

10. Abdichtungsanordnung nach einem der vorstehenden Ansprüche, **dadurch gekennzeichnet, dass** der Endabschnitt des Federschenkels (25) eine in Richtung des Rastkanals (27) weisende Ausformung (28) aufweist, die mit dem Rasthaken (16) zusammenwirkt.

11. Abdichtungsanordnung nach einem der vorstehenden Ansprüche, **dadurch gekennzeichnet, dass** das Anbauteil (14) eine Wasserkastenabdeckung ist.

12. Fahrzeugscheibe (10) mit einer an der Fahrzeugscheibe (10) befestigten Abdichtungsanordnung nach einem der vorstehenden Ansprüche.

13. Kraftfahrzeug mit einer Fahrzeugscheibe nach Anspruch 12.
